# EUROPEAN PATENT APPLICATION

(11) **EP 1 517 227 A2**
(43) Date of publication of application: **23.03.2005**
(21) Application number: 04019193.4
(22) Date of filing: 12.08.2004
(51) Int. Cl.: G06F 3/033

(54) **Window control method**

(30) Priority: 16.09.2003 JP 2003323442
(71) Applicant: Hitachi Software Engineering Co., Ltd., Yokohama-shi, Kanagawa 230-0045 (JP)
(72) Inventor: Tsukiori, Mitsuharu Hitachi Software Eng. Co. Ltd., Tokyo 140-0002 (JP)
(74) Representative: Liesegang, Eva

(57) **Abstract**

A method allows a window to be enlarged, reduced in size, or moved easily by designating an operated object without performing an operation of accurately positioning a point position at a frame line or vertex as the operated object. The method comprises a step of sequentially acquiring the position of a pointer of said pointer device as said pointer is moved after the movement trajectory of said pointer intersects itself following the start of a pointer moving operation, until said pointer moving operation is completed, and storing the thus acquired positions in a table; a step in which it is determined if a part of the movement trajectory of said pointer that is obtained by connecting the information about the movement positions of said pointer stored in said table intersects any of the frame lines of the window as a controlled object, and if it does, the following factors: a. the number of intersected frame lines of the window; and b. the number of end-point coordinates of the intersected frame lines, in order to determine the movement trajectory of said pointer corresponds to which of the instructions of the enlargement/reduction and movement of the window frame, and the window frame or a vertex is determined as the object of operation; and a step of enlarging, reducing, or moving the window frame or vertex as the object of operation in accordance with the thus recognized instruction, in a positional direction in which the movement operation of said pointer has ended after the movement trajectory of said pointer intersected itself, until the completion of the movement operation, by moving the window frame or vertex in accordance with the amount of movement of said pointer.

## Description

### BACKGROUND OF THE INVENTION

### Field of the Invention

The present invention relates to a window control method whereby a window displayed on a screen can be easily increased or reduced in size or moved by a gesturing operation using a pointer.

### Background Art

In some applications for performing operations such as increasing or decreasing the size of a figure or moving it, a rectangular enclosing the figure is displayed and a mark is indicated at a vertex or at the center of a side of the rectangle, or a mark is indicated at a vertex of the figure. When increasing or reducing the size of the figure, or when moving it, a cursor is positioned at these marks by designating the position using a pointer device, and the figure is then dragged in a desired direction.

In many of the window systems, the windows that are displayed are rectangular. By dragging a figure using the pointer device with the cursor positioned at any of the sides of the rectangle, the size of the figure can be increased or decreased horizontally or vertically while maintaining the position and length of the side opposite to the side with which the cursor is aligned. Further, by dragging the figure using the pointer device while the cursor is positioned in a certain area including a vertex, the size of the figure can be increased or reduced horizontally and/or vertically while fixing the position of the vertex opposite the vertex included in the certain area (see Patent Document 1).

(Patent Document 1) JP Patent Publication (Kokai) No. 6-103013 A 1994

### SUMMARY OF THE INVENTION

When increasing or reducing the size of a figure, or moving, maximizing or minimizing it, it is necessary to align the cursor or point within a very narrow area, such as a frame line or a vertex, using the pointer device. As a result, depending on the manner of alignment, a separate, unintended frame line might be erroneously designated, or an unintended operation might be carried out.

In particular, in the case where a window is projected on a screen consisting of a white board, as in an electronic blackboard system, when a variety of operations, such as drawing of a figure, is carried out using a pointer device (electronic pen) within the projected window, the origin of the coordinate system for recognizing the point position of the pointer device must be aligned with the origin of the coordinate system of the window frame that is projected. After this alignment, if the position of the whiteboard itself is shifted by vibrations or a contact with someone, for example, the origins of the two coordinate systems would be misaligned. In such a condition, even if the point position of the pointer device were accurately aligned with the frame line or vertex of the projected window in order to increase or reduce the size of the window, the point position that is recognized would be different from the position of the frame or vertex designated by the operator. Thus, in order to allow the frame line or vertex designated by the operator to be recognized in this condition and perform size increase or reduction, it has been necessary for the operator to carry out the pointing operation while taking into consideration the difference of the origins of the two coordinate systems. This has led to the reduction of operability during the size increase/reduction operations.

Moreover, the method disclosed in Patent Document 1, which the present inventors have proposed, has the problem that the window frame cannot be moved and that it is not capable of increasing or decreasing the size of a window frame in an opposite angle direction while using an arbitrary vertex thereof as a movable object.

It is therefore an object of the invention to provide a window control method whereby an operated object can be identified without requiring the point position to be accurately aligned with a frame line or vertex as the operated object, thereby allowing the increase or decrease of the size of the window, as well as the moving thereof, to be performed easily.

In order to achieve the aforementioned object, the invention provides a method of controlling the size of a window and the position thereof on a screen in a window system, using a pointer device capable of designating a desired position on the screen, said method comprising:
a first step of sequentially acquiring the position of a pointer of said pointer device as said pointer is moved after the movement trajectory of said pointer intersects itself following the start of a pointer moving operation, until said pointer moving operation is completed, and storing the thus acquired positions in a table;
a second step in which it is determined if a part of the movement trajectory of said pointer, which is obtained by putting together the information about the movement positions of said pointer that are stored in said table, intersects any of the frame lines of the window as a controlled object, and in which, if it does, the following factors:
   a. the number of frame lines of the window that are intersected; and
   b. the number of end-point coordinates of the intersected frame lines,
      are checked in order to recognize to which of the instructions of the enlargement/reduction and movement of a window frame the movement trajectory of said pointer corresponds, and to determine a window frame or a vertex as the operated object; and
a third step of enlarging, reducing, or moving the window frame or vertex determined as the operated object in accordance with the thus recognized instruction, in a positional direction in which the movement operation of said pointer has ended after the movement trajectory of said pointer had intersected itself, by an amount corresponding to the amount of movement of said pointer executed before the completion of the movement operation.

The second step may comprise further recognizing, based on a combination of said factors, if the movement trajectory of said pointer corresponds to an instruction for maximization or minimization of the window frame, and, if it corresponds to an instruction for maximization or minimization, the entire window frame is maximized or minimized to a preset size, instead of said third step.

In accordance with the invention, a pointer of a pointer device capable of designating an arbitrary point on the screen is moved, and a gesturing operation is carried out such that one of the vertexes at the four corners of the window frame, for example, is encircled by the trajectory of the movement, thereby designating the operated object. The operated object is then moved such that the window frame is enlarged or reduced in size in the direction of movement of the pointer by an amount corresponding to the movement. Thus, the need for accurately positioning the pointer cursor at a vertex of the window can be eliminated.

Similarly, a gesturing operation cna be performed such that one of the four sides of the window is encircled by the trajectory of movement of the pointer, thereby designating one of the frames of the window as the operated object. The operated object is then moved such that the entire window is moved in the direction of movement of the pointer by an amount corresponding to the movement of the operated object. Thus, the need for accurately positioning the pointer cursor at a frame line of the window can be eliminated.

Thus, the operability during the enlargement/reduction or movement of the window can be improved. In particular, in a system, such as the electronic blackboard system, where the origin of the coordinate system for recognizing the position of the pointer on the screen consisting of a white board tends to become out of alignment with the origin of the projection coordinate system for the projection and display of the window, the invention allows the user to enlarge, reduce or move the window without worrying about the potential misalignment between the projected and displayed pointer cursor and the point position of the pointer device. Thus, the operability during the enlarging, reducing, or moving the window can be improved.

### BRIEF DESCRIPTION OF THE DRAWINGS

Fig. 1 shows how the pointer is operated in accordance with a method of the invention for enlarging or reducing the size of a window.
Fig. 2 shows how the pointer is operated in accordance with a method of the invention for moving a window.
Fig. 3 shows how the pointer is operated in accordance with a method of the invention for maximizing or minimizing a window.
Fig. 4 shows the definitions of commands in a window control method according to the invention.
Fig. 5 shows the definitions of commands in a window control method according to the invention.
Fig. 6 shows a block diagram of an embodiment of the invention.
Fig. 7 illustrates the operation for enlarging or reducing the size of a figure.
Fig. 8 shows how the contents of a pointer data table change.
Fig. 9 shows how the contents of an intersection record table change.
Fig. 10 shows recorded contents of an operated object/operation content memory area.
Fig. 11 shows recorded contents of a coordinate difference memory area.
Fig. 12 shows recorded contents of a figure data table.
Fig. 13 shows a flowchart of sequences of processes performed in accordance with the invention.
Fig. 14 shows an example of a pointer operation, illustrating a process sequence of the invention.
Fig. 15 shows a flowchart continuing from the one shown in Fig. 13.
Fig. 16 shows a flowchart continuing from the one shown in Fig. 15.
Fig. 17 shows a flowchart continuing from the one shown in Fig. 16.
Fig. 18 shows a flowchart continuing from the one shown in Fig. 16.
Fig. 19 shows a flowchart continuing from the one shown in Fig. 16.
Fig. 20 shows a flowchart continuing from the ones shown in Figs. 17 to 19.
Fig. 21 shows a flowchart continuing from the one shown in Fig. 20.
Fig. 22 shows a flowchart continuing from the one shown in Fig. 21.
Fig. 23 shows a flowchart continuing from the one shown in Fig. 21.
Fig. 24 shows a flowchart continuing from the one shown in Fig. 20.
Fig. 25 shows a flowchart continuing from the one shown in Fig. 24.
Fig. 26 shows a flowchart continuing from the one shown in Fig. 25.
Fig. 27 shows a flowchart continuing from the one shown in Fig. 24.
Fig. 28 shows a flowchart continuing from the one shown in Fig. 20.
Fig. 29 shows a flowchart continuing from the one shown in Fig. 20.
Fig. 30 shows tables necessary for realizing the process sequences according to the invention.
Fig. 31 shows a work area necessary for realizing the process sequences according to the invention.
Fig. 32 shows examples of kinds of enlargement or reduction of a window according to the invention.
Fig. 33 shows examples of kinds of movement of a window according to the invention.

### DESCRIPTION OF THE PREFERRED EMBODIMENTS

The invention will be described by way of embodiments with reference made to the drawings.

In accordance with the invention, a pointer cursor of a pointer device capable of designating an arbitrary point on a screen is moved. For example, the cursor is moved to execute a gesturing operation such that one of the four vertexes at the four corners of a window frame is enclosed, thereby designating an operated object based on the trajectory of the movement of the cursor. The operated object can then be moved such that the window frame can be increased or decreased in size in the direction of movement of the operated object by an amount corresponding to the amount of that movement.

Specifically, a vertex or frame of a window is designated as an operated object when increasing or decreasing the size of a window frame or when moving it on the screen. The vertex or a part of the window frame as the operated object is then encircled by the trajectory of the pointer in a gesturing operation. The sequence of the coordinates of the trajectory of movement of the pointer as the gesturing operation is carried out is sequentially stored in a table in a memory. It is then determined if a trajectory segment constituting the trajectory before it intersects itselt intersects a segment constituting the window frame. If they intersect, the coordinates of end points (start-point coordinates and end-point coordinates) of the frame line constituting the window frame are stored. Then, factors consisting of the number of the intersecting window frame lines and the number of the end-point coordinates of the intersecting frame lines are checked. Based on a combination of these factors, it is recognized to which instruction, namely that for increase or decrease of the size of the window frame, or that for a movement of the window frame, the movement trajectory of the pointer corresponds. At the same time, the window frame or the vertex as the operated object is determined. Then, the window frame or the vertex that is determined as the operated object is moved in accordance with the recognized instruction in the direction in which the moving operation came to an end following the intersection of the pointer movement trajectory, by an amount corresponding to the amount of movement of the pointer executed before the end of the moving operation, thereby increasing or decreasing the size of the window frame, or moving it.

In cases where the number of the window frame lines stored are two or more, and if these window frame lines are made up only of three different coordinates, it is determined that a single vertex at the intersection of two line segments has been designated as the operated object. In this case, of the coordinates constituting each window frame line, the common coordinates are the coordinates of the intersecting point.

In cases where the number of the window frame lines stored is two or more, and if these windows are made up only of two different coordinates, it is determined that the window frame lines made up of the two coordinates have been designated as the operated object.

The content of operation, namely whether a size increase/decrease or a movement is to be selected, is determined by the number of the intersecting window frame lines, and the number of the end-point coordinates of the intersecting window frame lines. The allocation, however, may be arbitrary.

In cases where there are four or more end-point coordinates of the intersecting window frame lines, the operated object is not finalized.

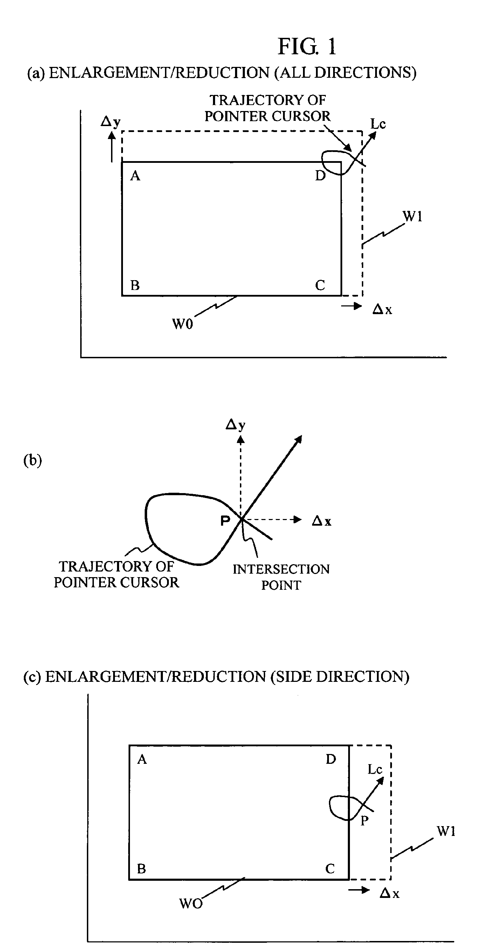

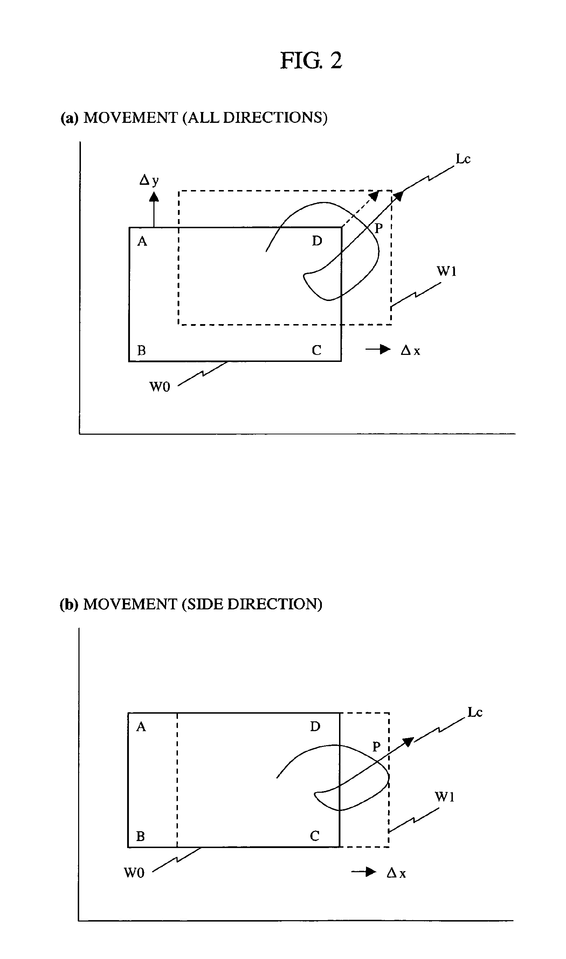

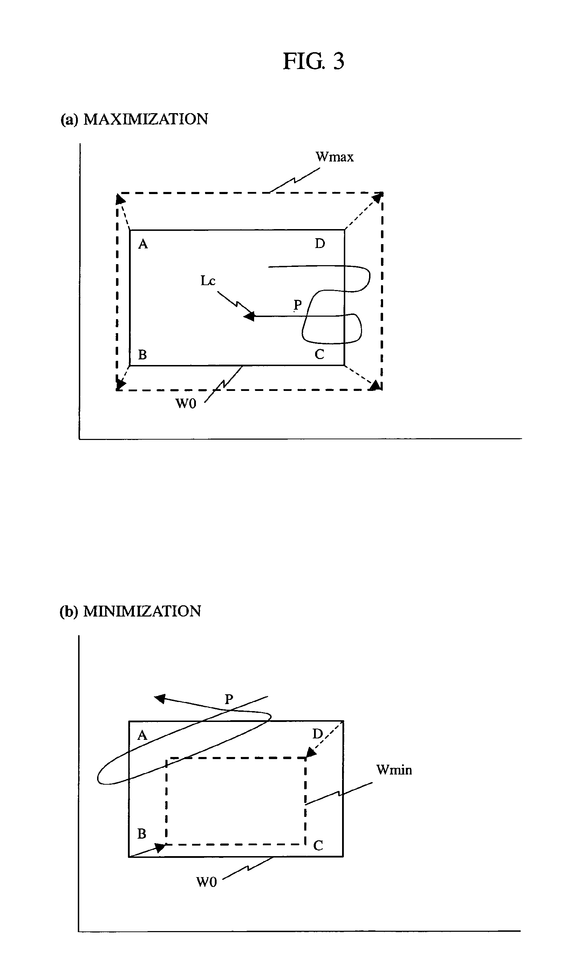

Figs. 1 to 3 illustrate the outline of the methods of increasing/decreasing the size of a window, and moving, maximizing or minimizing it. Fig. 1(a) shows a method of increasing the size of a window W0 comprising vertexes A to D by designating the vertex D as the operated object. Fig. 1(c) shows a method of increasing the size of the window W0 towards the right in the figure by designating a side (frame line) CD thereof as the operated object. Fig. 2(a) shows a method of moving the entire window W0 to an arbitrarily selected position on the screen by designating the vertex D and the side CD. Fig. 2(b) shows a method of moving the entire window to the top, bottom, left, or right in the screen by designating the side (frame line) CD thereof. Fig. 3(a) shows a method of maximizing the window W0 by designating the side (frame line) CD thereof as the operated object. Fig. 3(b) shows a method of minimizing the window W0 by designating sides (frame lines) AB and AD thereof as the operated objects.

With reference to Fig. 1(a), the pointer cursor is moved while a button on the pointer device (such as the left button on a mouse) is pressed. A gesturing operation is then performed to encircle, with a movement trajectory Lc, the vertex D of the window W0, thereby designating the vertex D as the operated object. An operation is further performed to move the vertex, namely the operated object. The designation of the vertex D as the operated object is recognized upon the movement trajectory Lc of the pointer cursor intersecting itself during the above operation. Which side of the window W0 is intersected by the moving trajectory Lc of the pointer cursor is stored each time such an intersection takes place, and the number of the end-point coordinates of the intersected sides is stored.

In the example of Fig. 1(a), it is recognized that the number of the frame lines of the window W0 that intersected the movement trajectory Lc is two, namely the sides AD and CD, and that the number of their end-point coordinates is three, namely A, C and D.

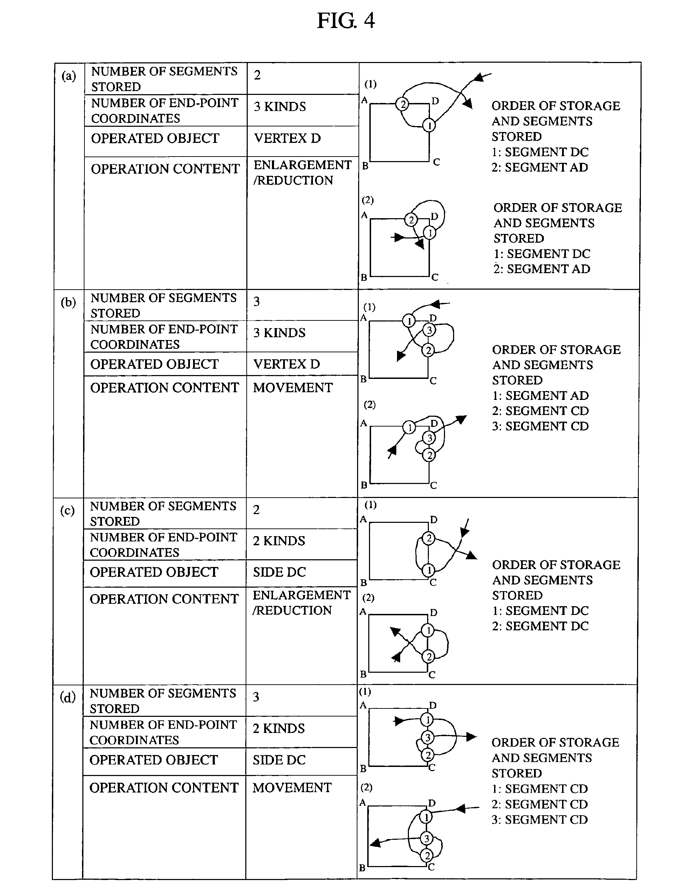

Thus, the operation in this case is recognized to be a command for enlargement/reduction of the window W0, with the vertex D designated as the operated object, in accordance with command definitions shown in Fig. 4.

As shown in Fig. 1(b), when it is detected that, after the movement trajectory Lc of the point cursor had intersected itself at intersection point P, the button on the pointer device (such as the left button on the mouse) was released when the movement trajectory Lc of the pointer cursor has been moved in the x and y directions by Δx and Δy, which indicates the end of the pointer moving operation, the horizontal sides AD and BC of the window W0 are extended by Δx and the vertical sides AB and CD are extended by Δy, thereby resulting in a window W1 shown in Fig. 1(a).

In this case, the enlargement is produced using vertex B, which is the opposite angle to the vertex D designated as the operated object, as a fixed point.

Whether the window is enlarged or reduced in size depends on the amount of movement of the pointer cursor with respect to intersection point P of the movement trajectory Lc. Namely, when both Δx and Δy are positive, the window is enlarged in the x and y directions, while when both Δx and Δy are negative, the window is reduced in size in the x and y directions. When only Δx is negative, the window is reduced in size only in the x direction and enlarged in the y direction.

Specifically, the amounts of movement Δx and Δy are calculated on the basis of the movement position P+1, which was the main factor in creating intersection point P of the movement trajectory Lc.

The drawing of the enlarged or decreased window should preferably be performed by tracking the movement of the pointer cursor on a real-time basis following the point in time when the movement trajectory of the pointer cursor intersected itself at intersection point P. When the window W0 is drawn by tracking the movement of the pointer cursor, whether the size of the window is appropriate can be confirmed on a real-time basis as the pointer cursor is moved until the required size of the window is achieved. In this case, the enlarging or decreasing operation is terminated by releasing the button on the pointer upon achieving a desired size. Alternatively, the drawing may be initiated upon release of the pointer device (at the point in time when the termination of the movement operation is instructed).

With reference to Fig. 1(c), when enlarging the window W0 toward the right of the figure by designating the side (frame line) CD thereof as the operated object, the pointer cursor is moved while maintaining the button on the pointer device (such as the left button on the mouse) pressed, and a gesturing operation is carried out such that a part of the side (frame line) CD is enclosed by the movement trajectory, thus designating the side (frame line) CD as the operated object. The side (frame line) CD as the operated object is then moved. When the movement trajectory of the pointer cursor intersects itself during this operation, it is recognized that the side (frame line) CD has been designated as the operated object. Concerning the number of the window frame lines that the movement trajectory of the pointer has intersected, since the side CD is recognized upon initial intersection, and then the same side CD is recognized upon next intersection, it is recognized that the number of the sides of the window that the movement trajectory has intersected is two, i.e., the sides CD and CD, and that the number of the end-point coordinates of these sides is two, namely C and D.

Thus, it is determined that this operation indicates a command for enlarging or reducing the window W0, with the side CD designated as the operated object, in accordance with the command definition shown in Fig. 4.

In this case, where the enlargement/reduction command has the single side CD as the operated object, after the movement trajectory of the pointer cursor intersected itself at intersection point P, as the button (left button on the mouse, for example) is released at a point in time when the movement trajectory of the pointer cursor has been moved to the x and y directions by amounts Δx and Δy, the side CD of the window W0 is extended toward the right of the figure by Δx, with the side AB, which is the opposite side to the side CD, used as the fixed side. The result is a window W1 shown in Fig. 1(c).

In the case of this enlargement/reduction command shown in Fig. 1(c), the window W0 can be extended or reduced in size horizontally or vertically in the figure. This command differs from the enlargement/reduction command of Fig. 1(a) in that the window W0 is not enlarged or reduced in the direction of an opposite angle. Whether the window is enlarged or reduced depends on Δx and Δy, as in the case of Fig. 1(a).

With reference to Fig. 2(a), the pointer cursor is moved with the button on the pointer device (left button on the mouse, for example) pressed, and a gesturing operation is carried out such that the vertex D and a part of the side CD of the window W0 are enclosed by the movement trajectory Lc.

If the movement trajectory Lc of the pointer cursor intersects itself at intersection point P during this operation, it is recognized that the vertex D has been designated as the operated object. With regard to the number of the window frame lines intersected by the movement trajectory Lc of the pointer cursor, the side AD is recognized upon initial intersection, the side CD is recognized upon the second intersection, and the side CD is recognized upon the third intersection. Thus, the number of intersected window frame lines is three, namely the sides AD, CD and CD, and the number of the end-point coordinates is three, namely A, C and D.

Thus, the operation in this case is determined to be indicative of an all-direction movement command for the window W0, with the vertex D designated as the operated object, in accordance with the command definition shown in Fig. 4.

In this case of the movement command of Fig. 2(a), after the movement trajectory Lc of the pointer cursor intersected itself at the intersection point P, as the button of the pointer device (such as the left button on the mouse) is released at a point in time when the movement trajectory Lc of the pointer cursor has moved in the x and y directions by Δx and Δy, the vertex D is moved by Δx and Δy on the screen, resulting in a window W1 shown in Fig. 2(a). In this case, the window is moved in all directions on the screen with the relative coordinates of the vertexes A, B, C and D of the window W0 fixed. The displaced position of the window W0 on the screen depends on Δx and Δy. When both Δx and Δy are negative with respect to the intersection point P of the movement trajectory, the window W0 is displaced from the current position in the -x (toward the left of the figure) and -y (toward the bottom of the figure) directions.

With reference to Fig. 2(b), the pointer cursor is moved with the button on the pointer device (such as the left button on the mouse) pressed, and a gesturing operation is carried out such that the side CD of the window W0 is encircled by the movement trajectory Lc, thereby designating the side CD as the operated object, which is then moved. When the movement trajectory Lc of the pointer cursor intersects itself during this operation, it is recognized that the side CD has been designated as the operated object. As to the number of the window frame lines intersected by the movement trajectory Lc of the pointer, the side CD is recognized upon initial intersection, and the same side CD is recognized upon the second intersection, and the side CD is again recognized upon the third intersection. Thus it is recognized that the number of the window frame lines that are intersected is three, namely three times the same side CD, and that the number of their end-point coordinates is two, namely C and D.

Thus, the operation in this case is determined to be indicative of a window movement command with the side CD designated as the operated object in accordance with the command definition of Fig. 4.

In the case of the movement command shown in Fig. 2(b), as the button on the pointer device (such as the left button on the mouse) is released when, following the intersection of the movement trajectory Lc of the pointer cursor at intersection point P, the movement trajectory Lc of the pointer cursor has further moved in the x and y directions by Δx and Δy, the side CD is moved toward the right of the figure by Δx, and the entire window W0 is moved toward the right by Δx on the screen. The result is a window W1 shown in Fig. 2(b). In this case, the window is moved on the screen with the relative coordinates of the vertexes A, B, C and D of the window W0 fixed.

In the case of the side-direction movement command of Fig. 2(b), if the X coordinates of the side designated as the operated object are the same, it is determined that the operation indicates a movement in the x direction (to the left or right in the drawing), and if the Y coordinates of the side designated as the operated object are the same, it is determined that the operation indicates a movement in the Y direction (to the top or bottom of the figure). The movement command of Fig. 2(b) differs from that of Fig. 2(a) in that the instant command involves only the top-bottom and left-right directions and does not involve the all-direction movement including the direction of the opposite angles of the window W0. The amount of movement of the window depends on the amount of movement Δx and Δy with reference to intersection point P following the intersection of the movement trajectory Lc at intersection point P. When moving the window W0 to the right in the screen, the side CD (or AB) is designated and the cursor is operated such that the movement trajectory Lc is directed to the right, as shown in Fig. 2(b). Then, ,the amount of movement with reference to intersection point P of the movement trajectory Lc is +Δx and the window W0 is moved toward the right in the screen.

When moving the window W0 toward the top in the screen, the side AD (or BC) is designated, and the cursor is operated such that the movement trajectory Lc is directed to the top in the screen. Then, the amount of movement with reference to intersection point P of the movement trajectory Lc is +Δy, so that the window W0 is moved toward the top of the screen.

With reference to Fig. 3(a), the pointer cursor is moved with the button on the pointer device (such as the left button on the mouse) pressed, and a gesturing operation is carried out such that the movement trajectory Lc passes across a part of the side CD of the window W0 four times, thereby designating the side CD as the operated object. If the movement trajectory Lc of the pointer cursor intersects itself at intersection point P, it is recognized that the side CD has been designated as the operated object. The number of the window frame lines intersected by the movement trajectory of the pointer is recognized to be four, namely the side DC (first time), the side CD (second time), the side CD (third time), and the side CD (fourth time), and the number of their end-point coordinates is recognized to be two, namely C and D.

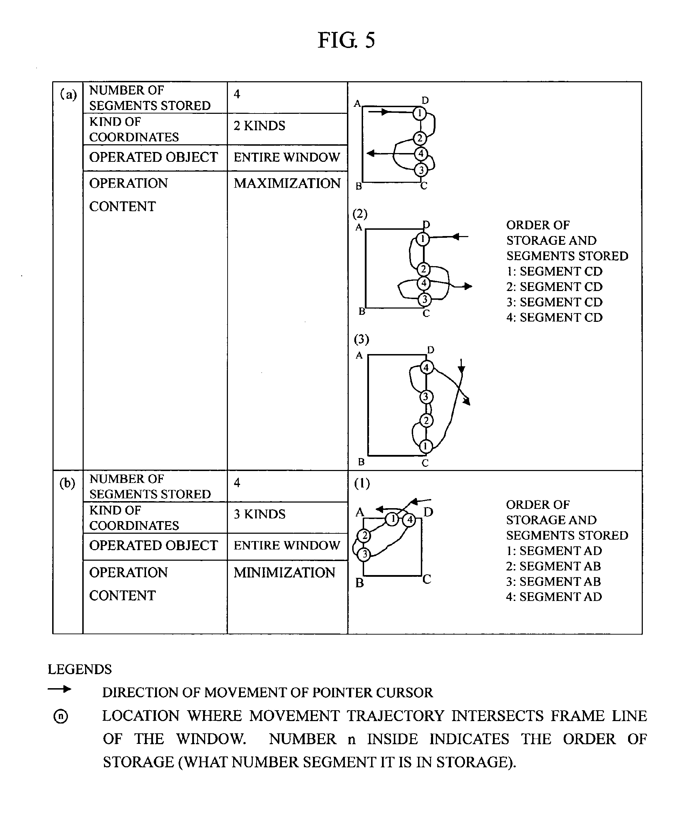

Thus, it is determined that this operation is indicative of a maximizing command with the entire window designated as the operated object, in accordance with the command definition shown in Fig. 5.

In the case of this maximizing command, the window W0 is modified to a maximum size that is set in advance, and then displayed as Wmax.

With reference to Fig. 3(b), the pointer cursor is moved with the button on the pointer device (such as the left button on the mouse) pressed, and a gesturing operation is carried out such that parts of the sides AB and AD of the window W0 are intersected twice each by the movement trajectory Lc, thereby designating the sides AB and AD as the operated object. If during this operation the movement trajectory Lc of the pointer cursor intersects itself at intersection point P, it is recognized that the sides AB and AD have been designated as the operated object. Then, the number of the window frame lines intersected by the movement trajectory of the pointer is recognized to be four, namely the side AD (first time), the side AB (second time), the side AB (third time), and the side AD (fourth time), or twice for the side AB and twice for the side AD. The number of their end-point coordinates is recognized to be three, namely A, B and D.

Thus, the instant operation is recognized to be indicative of a minimizing command with the entire window designated as the operated object, in accordance with the command definition shown in Fig. 5.

In the case of this minimizing command, the window W0 is modified to a minimum size that is set in advance, and is then displayed as Wmin.

Figs. 4 and 5 show examples of the definitions of the operation commands for performing the enlargement/reduction or movement of the window in accordance with the invention. Fig. 4(a) shows examples of the definition for performing all-direction enlargement or reduction. Fig. 4(b) shows examples of the definition for moving the entire window in all directions. Fig. 4(c) shows examples of the definition for performing enlargement or reduction only in the left-right or top-bottom directions. Fig. 4(d) shows examples of the definition for moving the current position of the window only in the left-right or top-bottom directions on the screen. Fig. 5(a) shows examples of the definition for maximization, and Fig. 5(b) shows examples of the definition for minimization.

In the case of the examples of the definition for carrying out an all-direction enlargement or reduction in Fig. 4(a), when the number of segments that are stored each time the movement trajectory of the pointer cursor intersects a segment (side) of the window is "2", and the number of the end-point coordinates of the segments intersected is "3", this is defined as an all-direction enlargement/reduction command, with the vertex at the end-point position common to each segment designated as the operated object.

Examples of the movement trajectory of the pointer cursor according to this definition are shown in Fig. 4(a), (1) and (2).

In the case of the examples of the definition for carrying out an all-direction enlargement or reduction in Fig. 4(b), when the number of segments that are stored each time the movement trajectory of the pointer cursor intersects a segment (side) of the window is "3", and the number of the end-point coordinates of the segments intersected is "2", this is defined as an all-direction movement command, with the vertex at the end-point position common to each segment designated as the operated object.

Examples of the movement trajectory of the pointer cursor according to this definition are shown in Fig. 4(b), (1) and (2).

In the case of the examples of the definition of an enlargement or reduction only in the left-right or top-bottom directions in Fig. 4(c), when the number of the segments that are stored each time a segment (side) of the window is intersected by the movement trajectory of the pointer cursor is "2", and the number of the end-point coordinates of the segments intersected is "2", this is defined as a side-direction enlargement/reduction command, with the segment indicated by the end-point coordinates designated as the operated object.

Examples of the movement trajectory of the pointer cursor according to this definition are shown in Fig. 4(c), (1) and (2).

In the examples of the definition of the case of moving the current position of the window only in the left-right or top-bottom direction on the screen in Fig. 4(d), when the number of the segments that are stored each time the movement trajectory of the pointer cursor intersects a segment (side) of the window is "3", and the number of the end-point coordinates of the intersected segments is "2", this is defined as a side-direction movement command with the segment indicated by the end-point coordinates designated as the operated object.

Examples of the movement trajectory of the pointer cursor according to this definition are shown in Fig. 4(d), (1) and (2).

In the examples of the definition of the case of maximization in Fig. 5(a), when the number of the segments that are stored each time a segment (side) of the window is intersected is "4", and the number of the end-point coordinates of the intersected segments is "2", this is defined as a maximization command with the entire window designated as the operated object.

Examples of the movement trajectory of the pointer cursor according to this definition are shown in Fig. 5(a), (1), (2) and (3).

In the examples of the definition of the case of performing minimization in Fig. 5(b), when the number of segments that are stored each time a segment (side) of the window is intersected by the movement trajectory of the pointer cursor is "4", and the number of the end-point coordinates of the intersected segments is "3", this is defined as a minimization command with the entire window designated as the operated object.

Examples of the movement trajectory of the pointer cursor according to this definition are shown in Fig. 5(d), (1).

The examples of the movement trajectory of the pointer cursor shown in Figs. 4 and 5 are merely typical examples, and it should be noted that the invention is not limited thereto.

In accordance with the invention, the enlargement/reduction command and the movement command are distinguished from each other based on the number of segments stored whenever the movement trajectory of the pointer cursor intersects a segment (side) of the window, and the number of the end-point coordinates of the intersected segments.

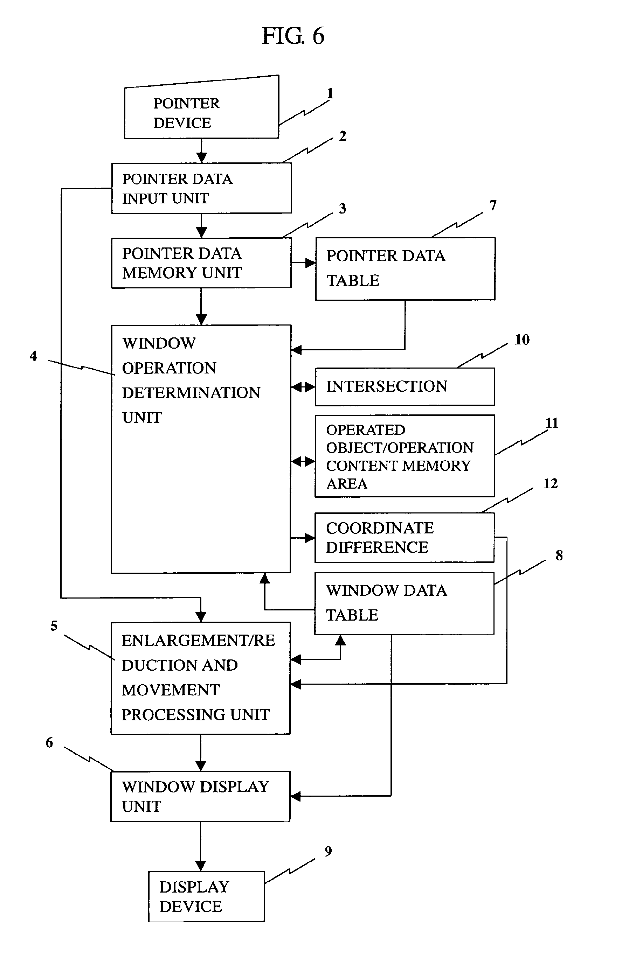

Fig. 6 shows a system configuration according to an embodiment of the invention. This configuration can be adapted for an electronic blackboard system employing a white board as a display screen.

The system of the present embodiment comprises a pointer device 1 for operating a figure or window frame displayed on the display screen, a pointer data input unit 2 for receiving pointer data from the pointer device 1, and a pointer data memory unit 3 and pointer data table 7 for storing the pointer data. The system further comprises a window operation determination unit 4 for determining the operated object and the content of operation in the window frame based on the movement trajectory of the pointer cursor, which is determined by linking the pointer data, a window data table 8 in which the data for a displayed window frame is stored, and an enlargement/reduction and movement processing unit 5 for enlarging/reducing or moving a window based on the operated object and the operation content in the window that are determined by the window operation determination unit 4. Further included in the system are a window display unit 6 for carrying out processes for displaying a window or figures, a display device 9 for displaying the window or figures, an intersection record table 10 for storing information about the sides of the window frame upon intersection of the movement trajectory of the pointer cursor and a side of the window frame, an operate object/operation content memory region 11 for storing the operated object and the operation content, and a coordination difference memory region 12 for storing the difference between the coordinates at which the entry of the pointer cursor trajectory data has been completed and a side or point as the operated object.

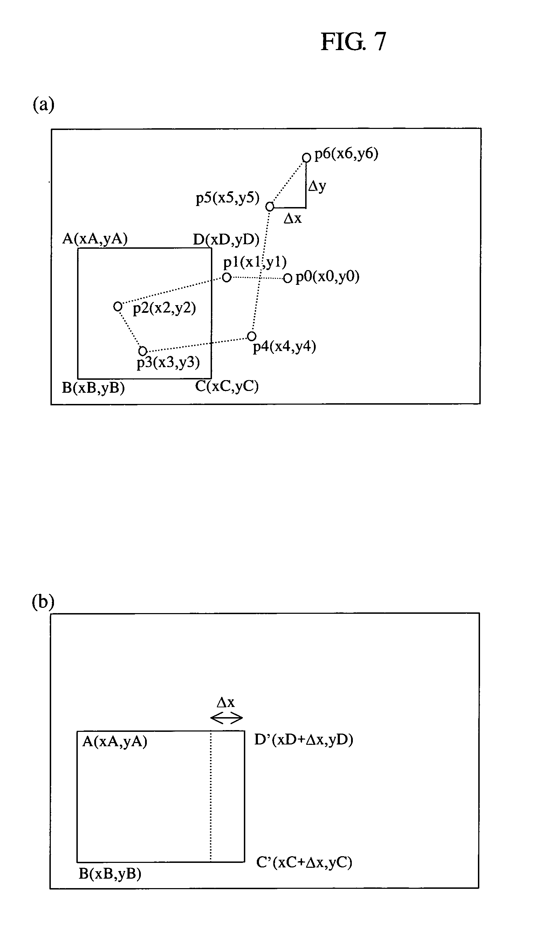

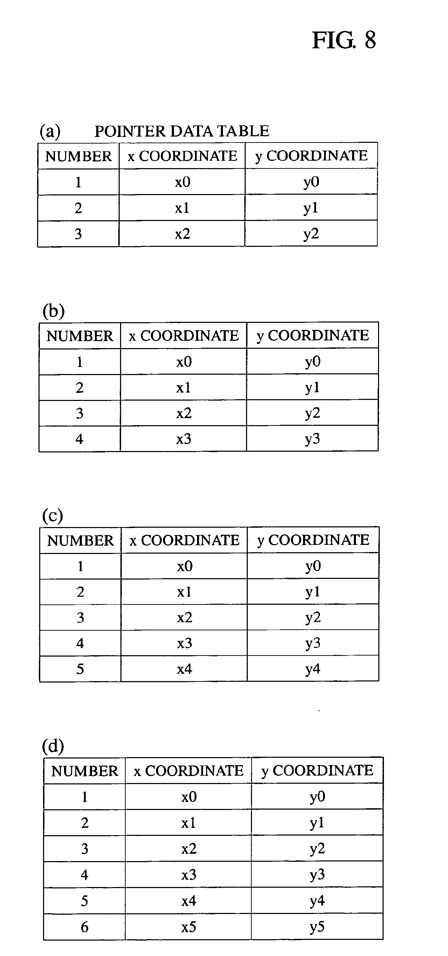

An example will be described in which, in the above-described configuration, a rectangular window including four vertexes A, B, C and D shown in Fig. 7(a) is enlarged to a window W1 including window vertexes A, B, C' and D' shown in Fig. 8(b).

As described with reference to Fig. 1(b), when the window is enlarged along a side thereof, as the button on the pointer device (such as the left button on the mouse) is released when, after the movement trajectory Lc of the pointer cursor had intersected itself at intersection point P, the movement trajectory Lc of the pointer cursor has further moved in the x and y directions by Δx and Δy, the end of the pointer-moving operation is detected. This is then followed by the enlargement of the sides AD and BC in the horizontal direction by Δx and the sides AB and CD in the vertical direction by Δy.

With reference to Fig. 7(a), the data generated by the pointer device 1 is received by the pointer input unit 2 and then delivered to the pointer data memory unit 3. The pointer data memory unit 3 determines what number item of pointer data a particular item of pointer data is, and then stores it in the pointer data table 7.

The initial three items of pointer data, p0, p1, and p2, are stored as is. Fig. 8(a) shows the pointer data table 7, in which the x and y coordinate values of the three pointer data items p0, p1, and p2 are stored.

Upon entering the fourth pointer data p3, the pointer data memory unit 3 creates segments p0-p1, p1-p2, and p2-p3 based on the pointer data that has been entered in the past, and then checks to see if the last segment p2-p3 intersects any of the previous segments.

With reference to Fig. 7(a), since the segment p2-p3 does not intersect any of the previous segments, the pointer device p3 is stored in the fourth place of the pointer data table 7. Fig. 8(b) shows the memory content of the pointer data table 7 in this case.

Since there is no intersection upon the entry of the fifth pointer device p4 either, the pointer device p4 is stored in the fifth place of the pointer data table, as shown in Fig. 8(c).

Upon the entry of the sixth pointer device p5, since the segment p4-p5 intersects the segment p0-p1, the pointer device p5 is stored in the sixth place of the pointer data table, and this completes the entry of the trajectory data. The memory content in the pointer data table 7 in this case is shown in Fig. 8(d).

In response to the completion of the entry of the trajectory data, the figure operation determination unit 4 checks to see if any of the sides of the window W0 comprising the vertexes A, B, C and D that is currently displayed intersects the segments created from the trajectory data.

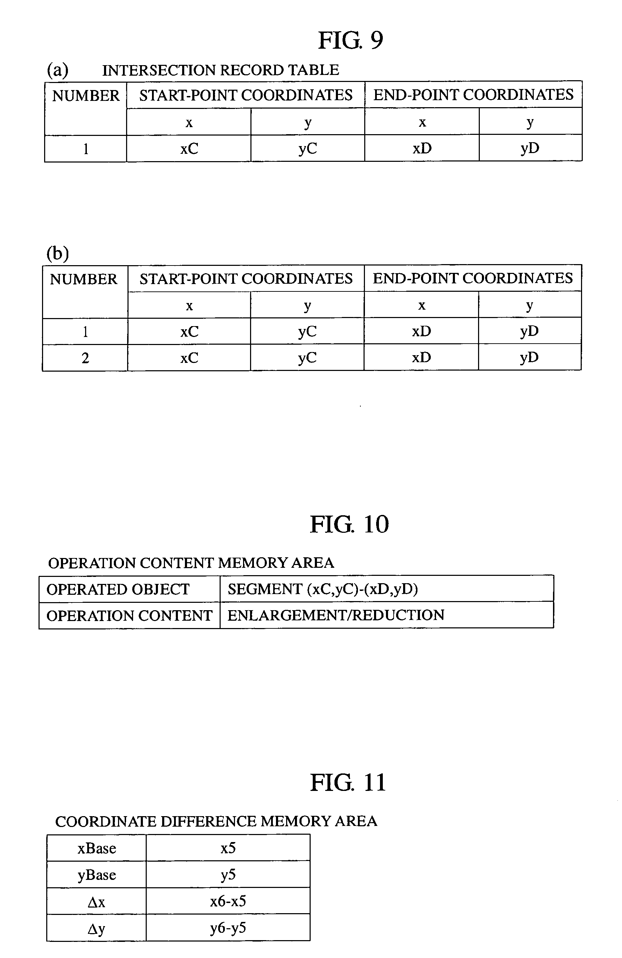

Initially, the segment p0-p1 is created from the pointer data table 7, and it is then determined if the segment intersects any of the sides AB, BC, CD, and DA. Then, the segment p1-p2 is created, and likewise it is determined if this segment intersects any of the sides of the window W0. The same determination is carried out for the segments p2-p3, p3-p4, and p4-p5. As a result, it is determined that the segment p1-p2 intersects the side CD. Thus, the starting point and the end point of the side CD, namely (xC, yC) and (xD, yD), are stored in the first place of the intersection record table 10, as shown in Fig. 9(a). Further, since the segment p3-p4 intersects the side CD, the starting point and end point of the side CD, namely C (xC, yC) and D (xD, yD), are stored in the second place of the intersection record table 10, as shown in Fig. 9(b), which completes the recording in the intersection record table 10.

It is then determined how many kinds of end-point coordinates are stored in the intersection record table 10. Since the recorded end-point coordinates are (xC, yC) and (xD, yD), it is seen that two kinds of end-point coordinates are stored. As the operated object is the side CD and the number of lines recorded in the intersection record table 10 is two, it is established that the operation content is enlargement or reduction.

The thus established operation content is written into the operate object/operation content memory region 11, as shown in Fig. 10.

Further, the coordinates of the pointer device p5, which represents the point in time at which the entry of the trajectory data was completed, are stored in the coordination difference memory region 12 in terms of a base point xBase, yBase of an enlargement/reduction or movement operation (Fig. 11).

Once the operated object and the operation content are established, the pointer data input unit 2 delivers the entered pointer data to the enlargement/reduction and movement processing unit 5. Thus, the pointer device p6 is sent to the enlargement/reduction and movement processing unit 5.

Upon reception of the pointer device p6, the enlargement/reduction and movement processing unit 5 calculates the difference from the base point (xBase, yBase) of an enlargement/reduction or movement operation, and then stores the difference in the coordinate difference memory area 12 shown in Fig. 11 in terms of Δx and Δy.

If the x coordinates of the start-poiint coordinates and the end-point coordinates of the side CD are identical, the enlargement/reduction and movement processing unit 5 adds Δx to the x coordinates of the side CD. If the y coordinates of the starting and end-point coordinates are identical, Δy is added to the y coordinates of the side CD. Thus, start-point coordinates C' of the side CD after the enlargement or reduction become (xC + Δx, yC), and end-point coordinates D' becomes (xD + Δx, yD).

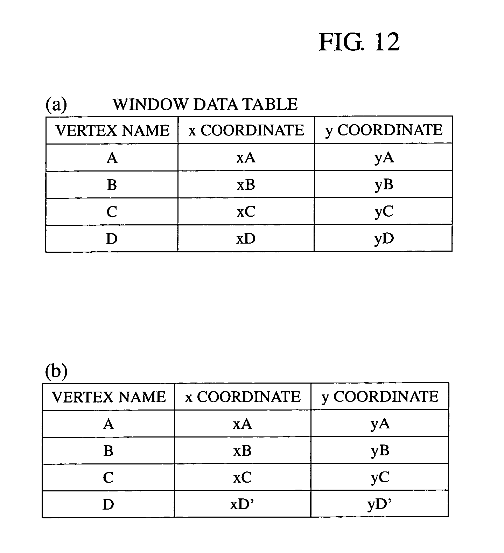

Based on the thus determined coordinates C' and D', the coordinates C and D in the window data table 8 are changed from the values shown in Fig. 12(a) to those shown in Fig. 12(b).

Thus, the window W0 is enlarged to a rectangle ABC'D'. The window display unit 6 then causes the display device 9 to display the enlarged rectangle ABC'D', as shown in Fig. 7(b), by referring to the window data table 8.

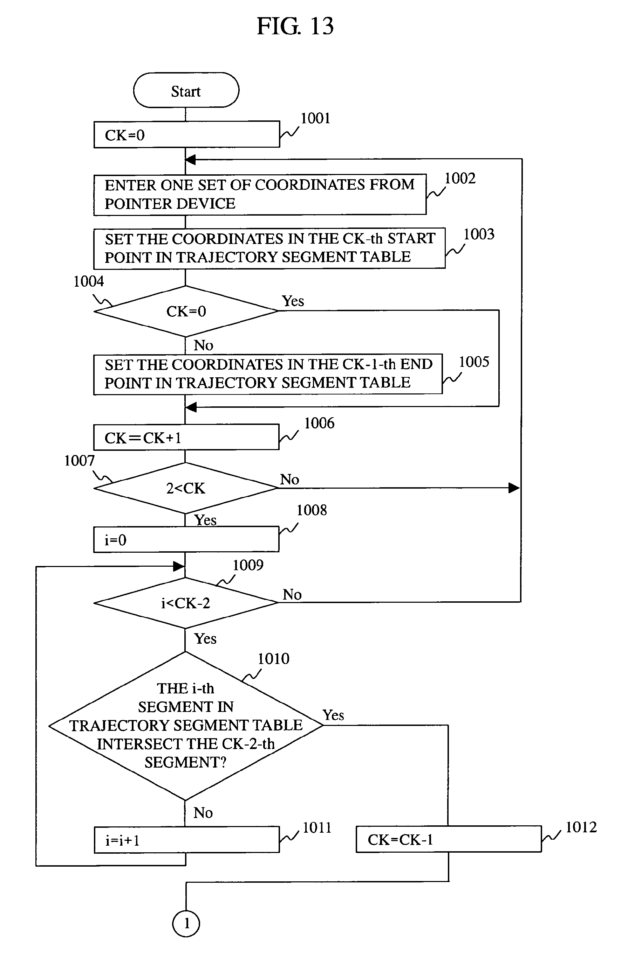

Figs. 13 to 29 show flowcharts of the processes for enlarging/reducing or moving figures.

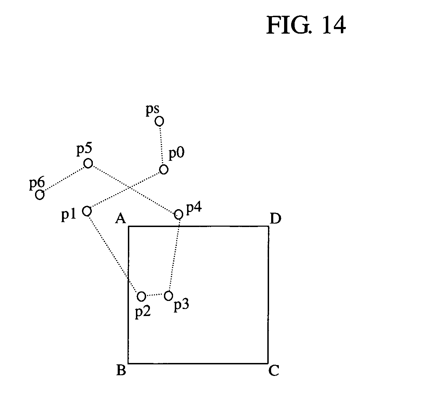

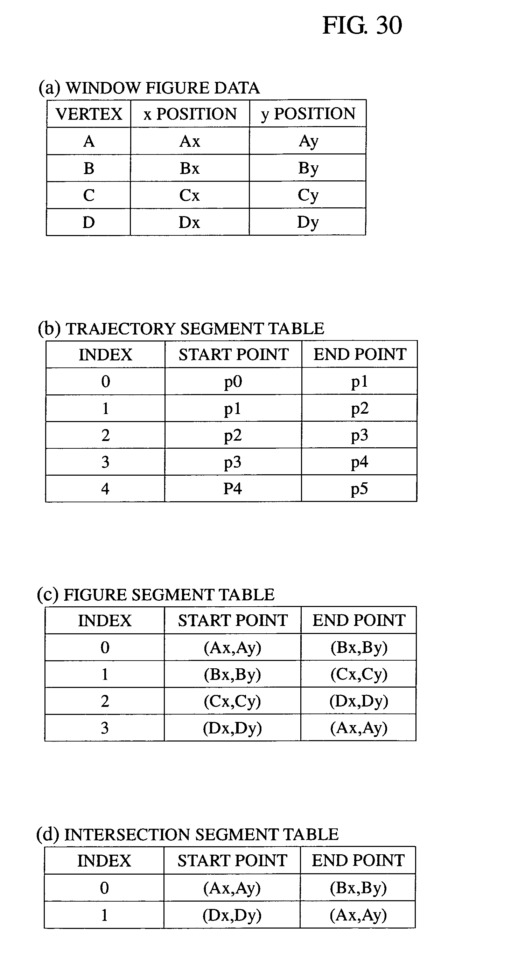

The flowcharts will be described by taking an example where the data for the window W0 comprising the vertexes A, B, C and D shown in Fig. 14 is stored in the window data table 8, as shown in Fig. 30(a), and the coordinate data is generated in the order of p0, p1, p2, p3, p4, and p5 by operating the pointer device 1 at the position ps in Fig. 14.

In this example, it is assumed that the data for the window W0 is stored in the window data table 8 in an anticlockwise sequence starting from the upper-left vertex.

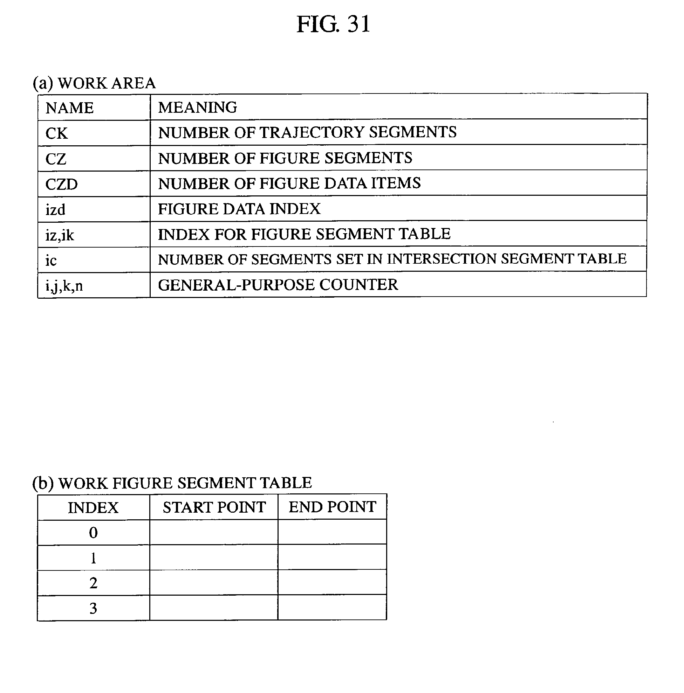

First, the coordinates generated by the pointer device 1 are entered to create a trajectory segment table shown in Fig. 30(b). Thereafter, 0 is set in a work area CK shown in Fig. 31(a) (step 1001). CK is an index for the trajectory segment table of Fig. 30(b).

Then, a single item of coordinate data is acquired from the pointer device 1 (step 1002).

The acquired coordinates are set at the CK-th start point in the trajectory segment table (step 1003). If they are the coordinates at the head, the setting of the end point is skipped (step 1004).

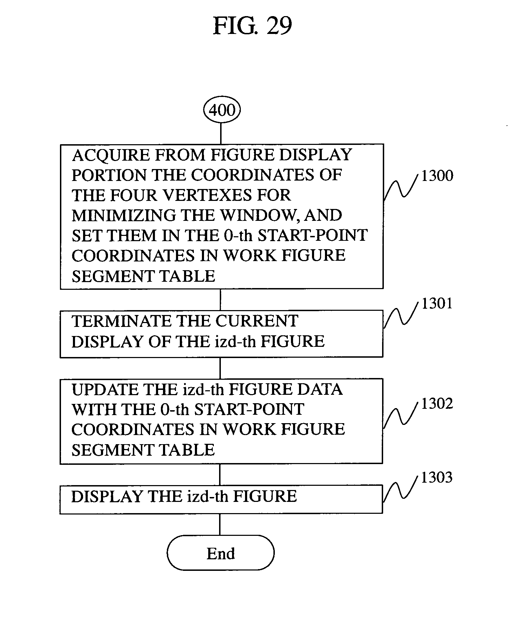

Then, if there are coordinates that have been entered previously, the currently entered coordinates are set at the CK-1-th end point in a trajectory segment table in Fig. 29(b) as the end-point coordinates (step 1005).

The value in the work area CK in Fig. 31 (a) is then increased by one (step 1006).

When the number of the trajectory segments is less than two, the routine returns to step 1002 (step 1007).

Then, 0 is set in a work area i in Fig. 31 (a) (step 1008). The work area i is an index in the trajectory segment table for listing the segments from the first trajectory segment to the last but one trajectory segment.

When the last but one trajectory segment is listed, the routine returns to step 1002 (step 1009).

It is then examined to see if the i-th segment in the trajectory segment table intersects the last trajectory segment (the segment recorded at the CK-2-th place in the trajectory segment table). If they intersect, the entry of coordinates from the pointer device 1 is terminated (step 1010), and the content of the work area CK is then reduced by one in order to update the content of CK with the number of the trajectory segments (step 1012). The routine then branches off to the process in step 1021. In the present example, the entry of coordinates from the pointer device 1 is terminated upon the entry of the coordinates p5 from the pointer device 1 when the segment p0-p1 and the segment p4-p5 intersect each other, resulting in the content of the trajectory segment table shown in Fig. 30(b). The content of the work area CK in Fig. 31 (a) becomes "5" following the process in step 1012.

In step 1010, if the two segments do not intersect each other, the content of the work area i in Fig. 31(a) is increased by just one, and the routine then returns to step 1009 (step 1011).

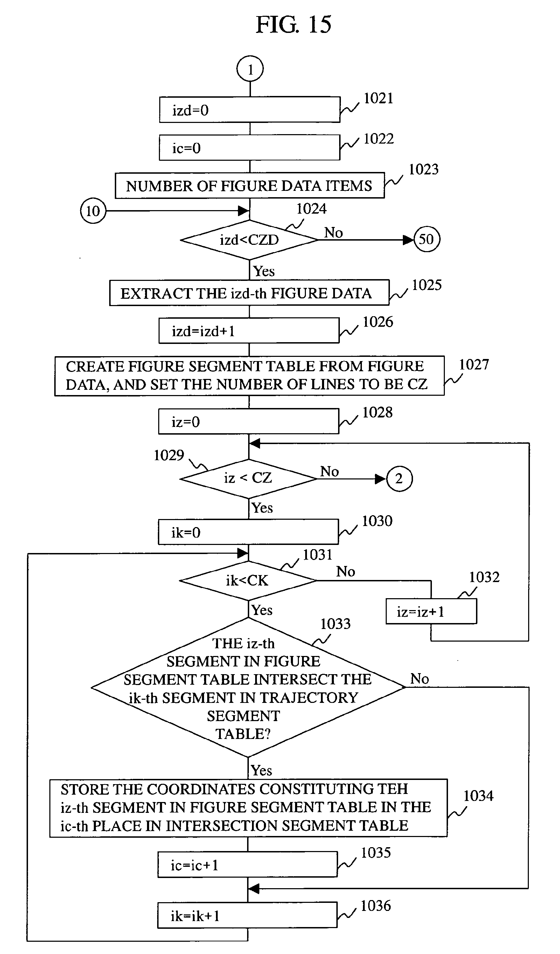

In step 1021 (Fig. 15), zero is set in a work area izd shown in Fig. 31 (a). The work area izd is an index for making a reference to figure data in the window W0.

Thereafter, zero is set in a work area ic shown in Fig. 31 (a). The work area ic is an index for an intersected segment table shown in Fig. 30(d) (step 1022).

The number of items of the figure data constituting the window W0 is then set in a work area CZD shown in Fig. 31 (a). In the present example, since only one window W0 is stored, 1 is set in CZD (step 1023).

It is then determined if izd < CZD. As izd is currently 0, the result of the determination in step 1024 is true.

If true, the figure data at the izd-th place is extracted. Since izd is currently 0, the figure data for the window W0 is extracted (step 1025).

Then, in order to extract the coordinate data, izd is increased by 1 (step 1026).

Based on the x and y positions of the figure data, a figure segment table shown in Fig. 30(c) is created. In the present example, a figure segment table comprising four lines, namely the segments AB, BC, CD and DA, is created, and the number (four) is set in a work area CZ shown in Fig. 31 (a) (step 1027).

Then, 0 is set in a work area iz shown in Fig. 31 (a). The work area iz is an index for the figure segment table (step 1028).

It is then determined if iz < CZ. As iz is currently 0, the result of determination in step 1029 is true.

If true, 0 is set in a work area ik shown in Fig. 31 (a). The work area ik is an index for the trajectory segment table (step 1030).

It is then determined if ik < CK. As ik is currently 0, the result of determination in step 1011 is true.

If true, it is then determined if the iz-th segment in the figure segment table and the ik-th segment in the trajectory segment table intersect each other. Since iz = 0 and ik = 0 currently, it is examined to see if the figure segment AB intersects the trajectory segment p0-p1. As these two segments do not intersect in the example of Fig. 14, the decision in step 1033 turns out false, and ik (index for the trajectory segment table) is increased by 1 in step 1036 before the routine returns to step 1031. If the decision in step 1033 turns out true, namely if the two segments intersect each other, the coordinates of the iz-th segment in the figure segment table are set in the ic-th place in the intersection segment table of Fig. 30(d) (step 1034), ic (index for the intersection segment table in Fig. 30(d)) is increased by 1 (step 1035), and ik (index for the trajectory segment table) is increased by 1, before the routine returns to step 1031.

Through these steps 1031, 1033, 1034, 1035, and 1036, the segments stored in the trajectory segment table are listed up, and it is determined if they intersects any of the iz-th segments stored in the figure segment table. If it does, the coordinates constituting the iz-th segment in the figure segment table are recorded in the intersection segment table.

Since currently iz = 0, the determination of whether or not the figure segment AB intersects any of the trajectory segments p0-p1, p1-p2, p2-p3, p3-p4, and p4-p5 shows that the trajectory segment p1-p2 is intersected. Thus, the coordinates constituting the figure segment AB, namely (Ax, Ay) and (Bx, By), are stored in the intersection segment table (Fig. 30(d)).

The end of the listing of the trajectory segments is determined in step 1031. If this decision turns out false, the routine returns to step 1029 after increasing the content of the work area iz (index for the figure segment table) shown in Fig. 31 (a) by 1.

Since currently iz = 1, the decision in step 1029 turns out true, so that the trajectory segments are listed in steps 1030, 1031, 1033, 1034, 1035, and 1036, and it is then examined to see if any of them intersects the iz-th segment in the figure segment table, namely the figure segment BC.

Thereafter, the intersection of the trajectory segments with regard to the figure segment CD (iz = 2) and the figure segment DA (iz = 3) is similarly examined (steps 1029 to 1036).

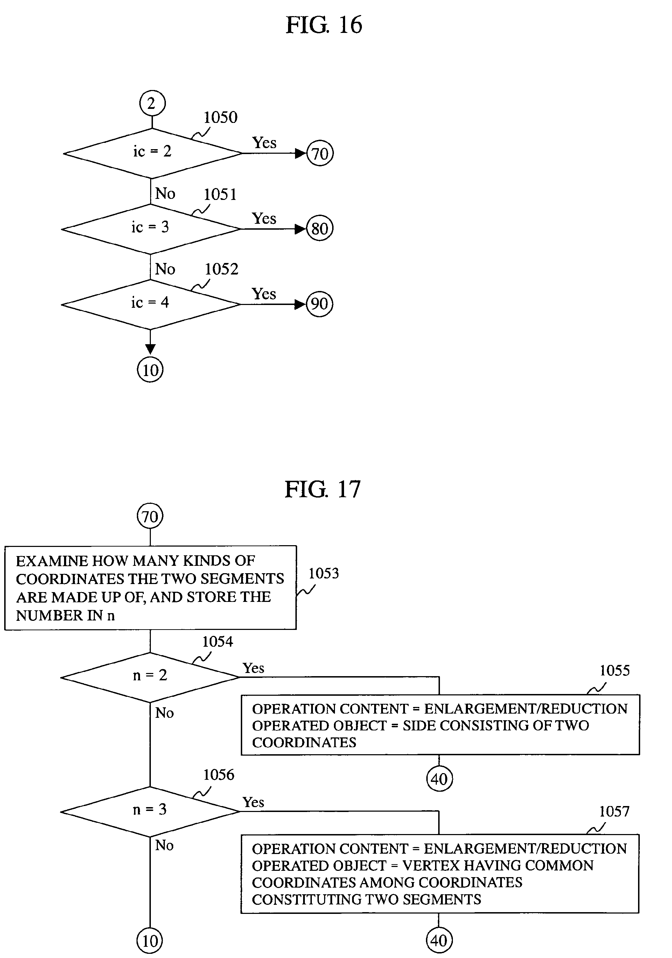

The listing of the figure segments is terminated in step 1029 when iz = 4. The routine then returns to step 1024 where the presence or absence of subsequent figure data is checked. Since currently izd = 1 and CZD = 1, the decision in step 1024 turns out false, and the routine proceeds to step 1050 shown in Fig. 16. At this point, the determination of intersection between the figure segments and the trajectory segments is completed.

In the process in Fig. 5, the routine branches off into individual processes depending on the number of the segments set in the intersection segment table (steps 1050, 1051, and 1052).

Specifically, if the number of the segments set in the intersection segment table is two, step 1053 shown in Fig. 17 is initiated.

It is then examined to see how many kinds of coordinates the two segments are made up of, and the number is set in the work area n shown in Fig. 30(a) (step 1053).

If n is 2, this shows that the two segments are made up of two kinds of coordinates and are identical, and it is concluded that the operation content is an enlargement/reduction operation, with this segment (side of the figure) designated as the operated object (steps 1054 and 1055).

If n is 3, this shows that the two segments are made up of three kinds of coordinates, and that there are single common coordinates. It is therefore concluded that the operation content is an enlargement/reduction operation with the common coordinates (vertex of the figure) designated as the operated object (steps 1056 and 1057).

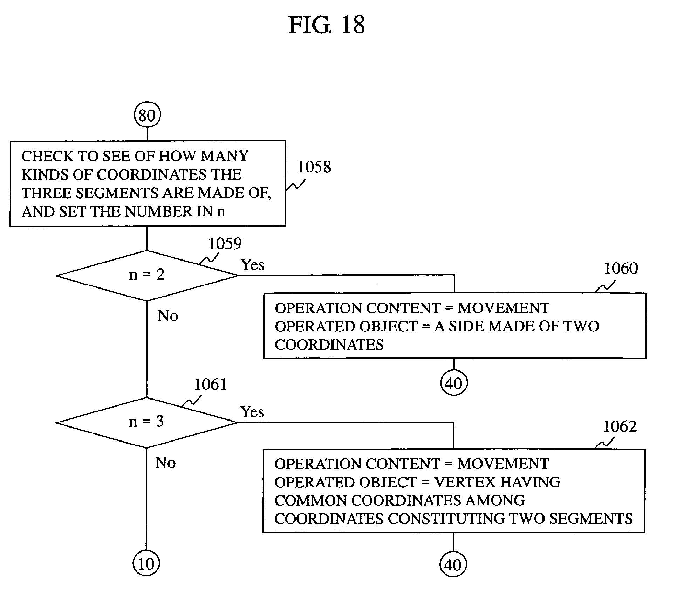

If the number of the segments set in the intersection segment table is three, step 1058 shown in Fig. 18 is initiated.

It is first examined to see how many kinds of coordinates the three segments are made up of, and the number is set in the work area n shown in Fig. 31(a) (step 1058).

If n is 2, this shows that two of the segments are made up of two kinds of coordinates and that the three segments are identical. It is therefore concluded that the operation content is a movement operation where these segments (sides of the figure) are designated as the operated object (steps 1059 and 1060).

If n is 3, this shows that the three segments are made up of three kinds of coordinates, and that there are single common coordinates. It is therefore concluded that the operation content is a movement operation where these common coordinates (a vertex of the figure) are designated as the operated object (steps 1061 and 1062).

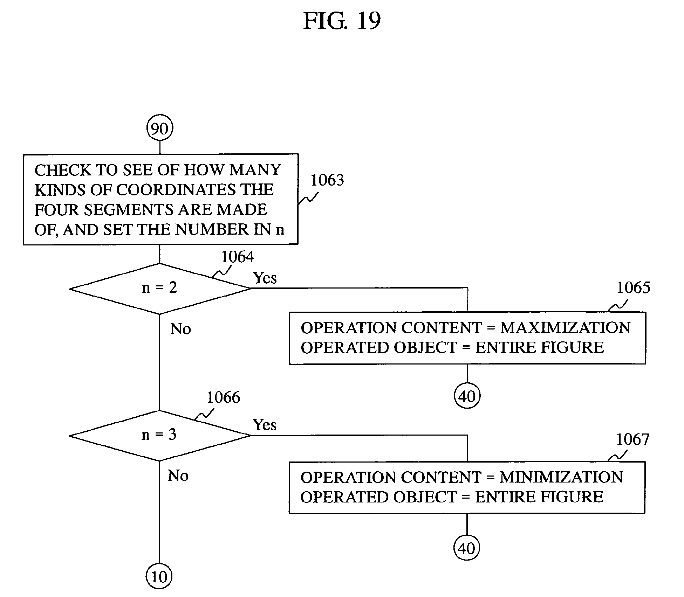

If the number of segments set in the intersection segment table is four, step 1063 shown in Fig. 19 is initiated.

It is first examined to see how many kinds of coordinates the four segments are made up of, and then the number is set in the work area n shown in Fig. 31(a) (step 1063).

If n is 2, this shows that the four segments are made up of two kinds of coordinates, and that the four segments are identical. Thus, it is concluded that the operation content is a maximizing operation where the entire figure, including these segments (sides of the figure) is designated as the operated object (steps 1064 and 1065).

If n is 3, this shows that the four segments are made up of three kinds of coordinates, and that there is a single set of common coordinates. Thus, it is concluded that the operation content is a minimizing operation where these common coordinates (a vertex of the figure) are designated as the operated object (steps 1066 and 1067).

In the case of the example shown in Fig. 14, two segments are set in the intersection segment table, and these segments are made up of three kinds of coordinates (Ax, Ay), (Bx, By), and (Dx, Dy). Since (Ax, Ay) are the common coordinates, the operation content is an enlargement/reduction operation where the operated object is the vertex (Ax, Ay).

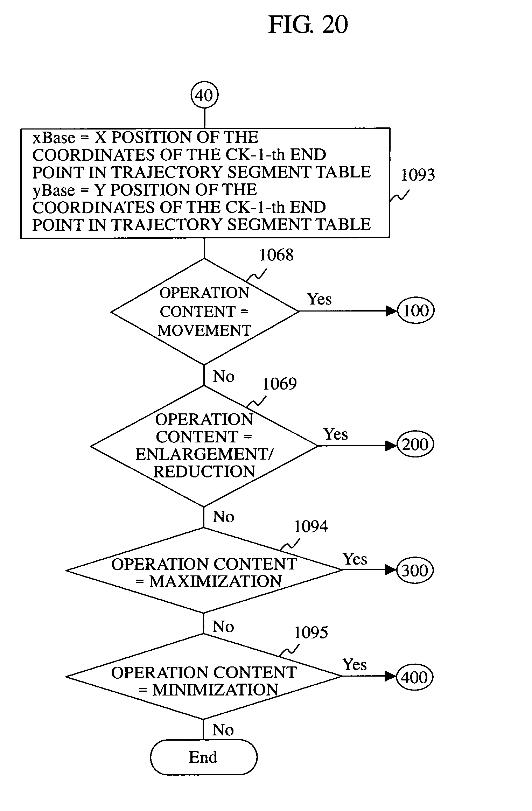

Next, in step 1093 shown in Fig. 20, the coordinates that is used when calculating the coordinate difference for performing a movement or enlargement/reduction operation are set in xBase and yBase.

In steps 1068, 1068, 1094, and 1095, the routine branches off to different processes depending on the operation content.

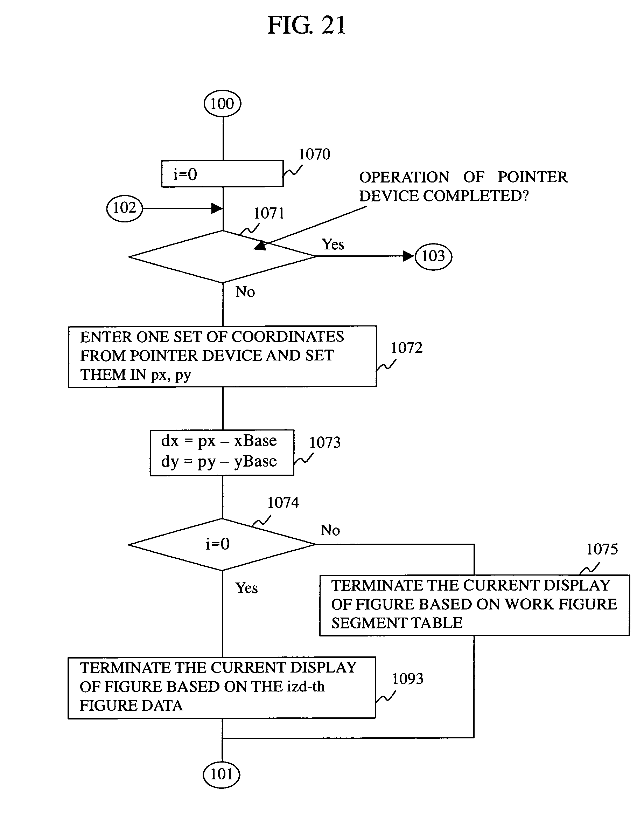

When the operation content is movement, the routine branches off to step 1070 shown in Fig. 21. In step 1070, a movement operation initiating process is performed whereby i is set to zero. When i = 0, this shows that the designation of the coordinates for the movement has not been made. When i = 1, this shows that at least one set of coordinates has been designated for the movement.

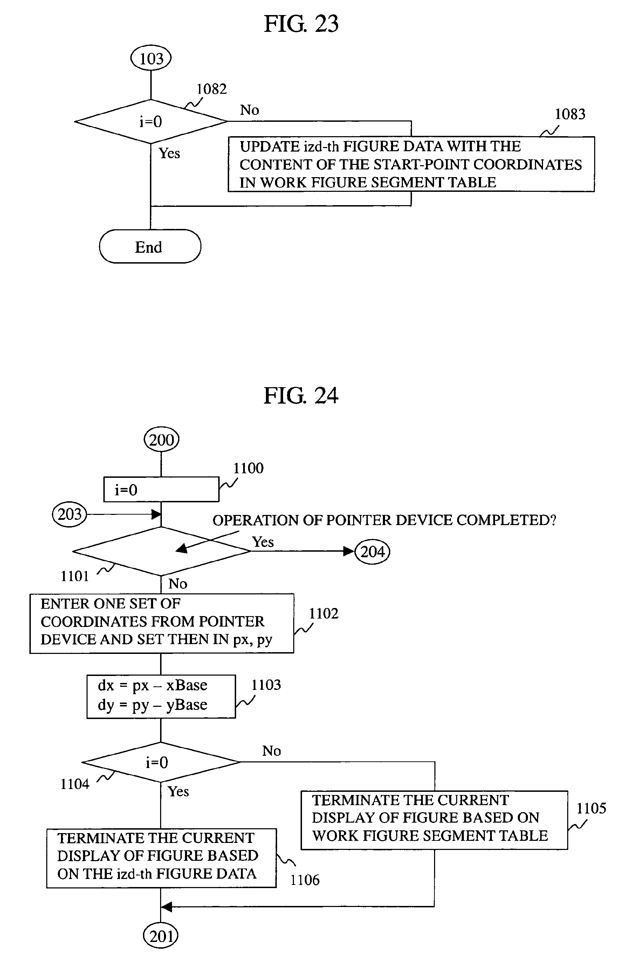

In step 1071, the state of the pointer device 1 is confirmed to see if the movement operation has been completed (by, for example, releasing the button). If the movement operation is completed, the routine jumps to step 1082 shown in Fig. 23.

If the movement operation is not completed, coordinates are entered in step 1072 from the pointer device and set in a work area px, py. In the present example, the x coordinate of p6 is set in px and the y coordinate of p6 is set in py.

In the next step 1073, the amount of change of the currently entered coordinates from the coordinates (xBase, yBase) is calculated, and the results are set in dx, dy.

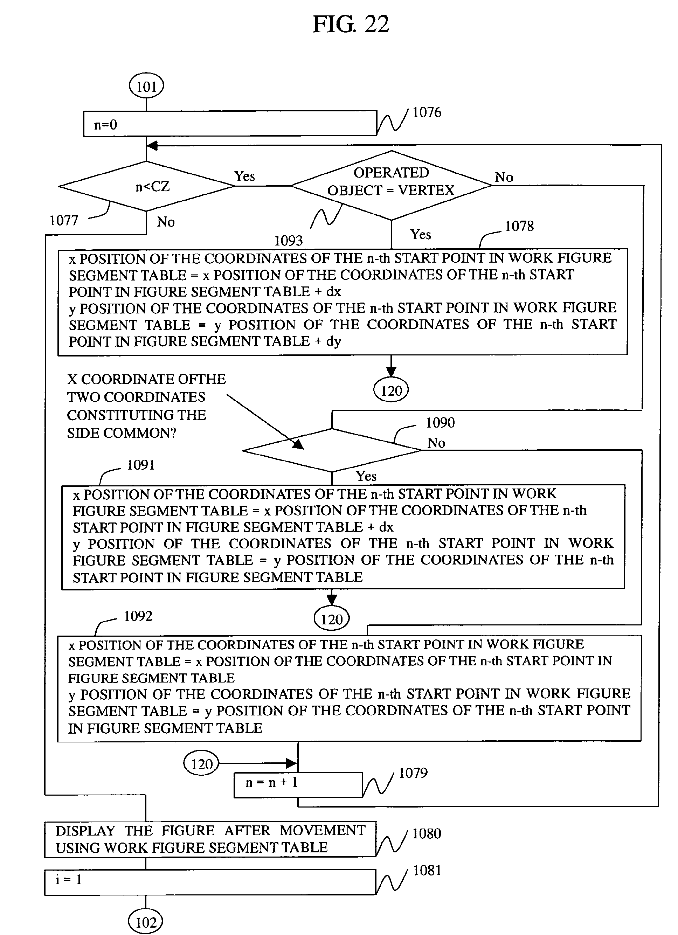

In step 1074, which concerns the display of a figure in movement, if i = 0, namely, if coordinates for the movement have been entered for the first time, step 1093 is carried out whereby the initial display of the figure data is terminated. If i is not 0, namely, if the coordinates for the movement are the second or later set, step 1075 is carried out whereby the figure in movement is not displayed. The routine then proceeds to step 1076 shown in Fig. 22.

In step 1076 shown in Fig. 22, 0 is set in the work area n, which is used as an index for the figure segment table.

In step 1077, it is determined whether all of the entries in the figure segment table have been listed (n < CZ). If they have, the routine jumps to step 1080.

If not, the routine proceeds to step 1093 where it is determined if the operated object is a vertex. If it is, step 1078 is carried out whereby the x and y coordinates of the n-th start point in the figure segment table (Fig. 30(c)) to which dx and dy is added, respectively, are set at the n-th start point in a work figure segment table shown in Fig. 31 (b).

If the determination in step 1093 turns out false, this shows that the operated object is a side, so that the routine proceeds to step 1090. In step 1090, it is determined whether the x coordinate of the start point coordinates and that of the end point coordinates of the side is identical. If they are identical, step 1091 is carried out whereby the x coordinate of the n-th start point in the figure segment table to which dx is added is set in the x coordinate of the start point in the work figure segment table, and the y of the n-th start point in the figure segment table is set in the y coordinate of the start point in the work figure segment table.

If the determination in step 1090 turns out false, this shows that the y coordinate of the start point and that of the end point of the side are identical. Thus, step 1092 is carried out whereby the y coordinate of the n-th start point in the figure segment table to which dy is added is set in the y coordinate of the start point in the work figure segment table in Fig. 31 (b), and the x of the n-th start point in the figure segment table is set in the x coordinate of the start point in the work figure segment table.

Thereafter, the index n in the figure segment table is increased by 1 in step 1079, and the routine then returns to step 1077.

If the determination in step 1077 turns out false, this shows that all of the entries in the figure segment table have been listed. Thus, step 1080 is carried out whereby the figure is displayed using only the coordinates of the start point in the work figure segment table.

In step 1081, 1 is set in i in order to indicate that the figure after movement has been displayed at least once.

Referring back to Fig. 21, if the determination in step 1071 turns out false, this shows that the pointer device 1 is being instructed to complete operation. Thus, the determination in step 1082 (i = 0) in Fig.23 is carried out. If in this step it is determined that the figure after movement has been displayed at least once, step 1083 is carried out whereby the coordinates are updated to those of the figure after movement.

Referring back to Fig. 20, if it is determined in step 1069 that the operation content is enlargement or reduction, the routine proceeds to step 1100 in Fig. 24. Step 1100 shown in Fig. 24 is an enlargement/reduction initiating process. First, 0 is set in the work area i in order to store the fact that the figure after enlargement or reduction has never been displayed.

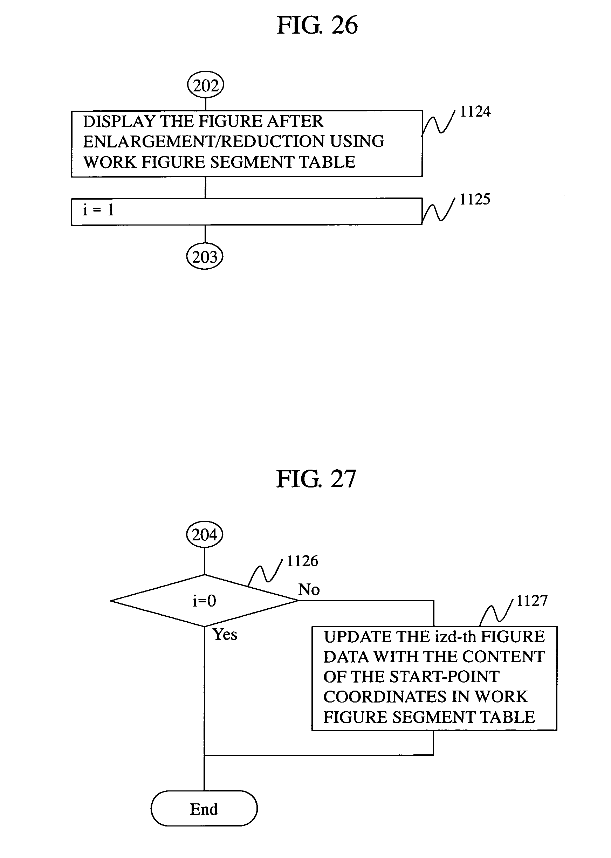

Next, in step 1101, it is determined whether or not the end of the enlargement/reduction operation has not been instructed via the pointer device 1. If not, a single set of coordinates is entered from the pointer device 1 in step 1102 and set in px, py. If such an instruction is present, the routine proceeds to step 1126 shown in Fig. 27.

In step 1103, the difference between the coordinates that have been entered and the coordinates as the start point (xBase, yBase) for enlargement/reduction is calculated and are set in dx, dy.

In step 1104, it is determined whether the figure after enlargement or reduction has been displayed in the past (i = 0). If true, the izd-th figure is not displayed (step 1106). If false, the display of the figure based on the coordinates of the start point in the work figure segment table is terminated (step 1105), and the routine then proceeds to step 1107.

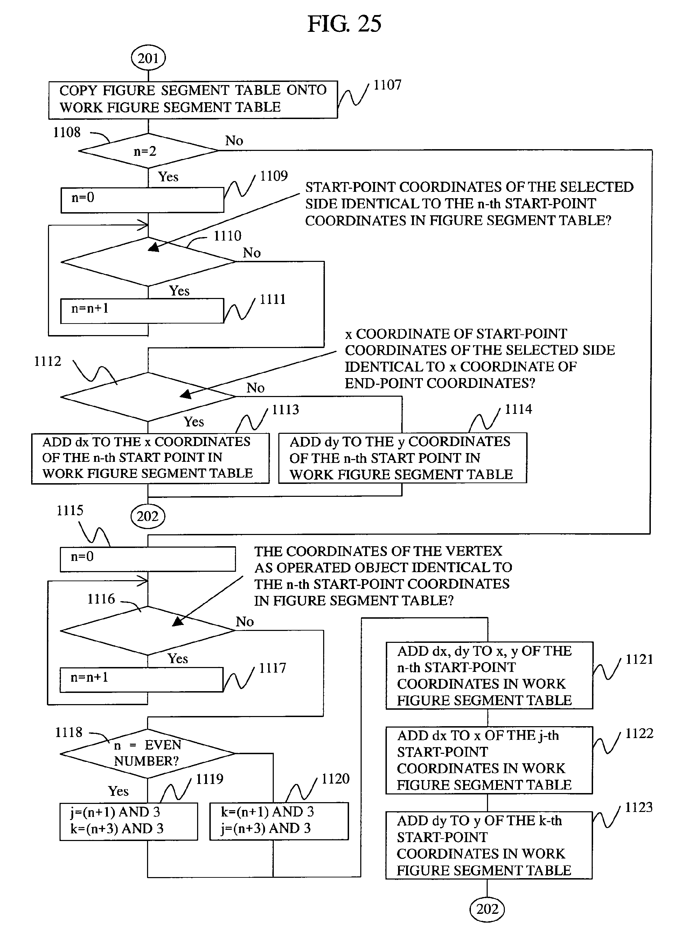

In step 1107 of Fig. 25, the content of the figure segment table is copied to the work figure segment table of Fig. 31 (b). By thus modifying a part of the work figure segment table, an enlargement or reduction is realized.

In step 1108, it is determined whether the operated object is a side or a vertex (n = 2). If it is a side (n = 2), step 1109 is carried out. It is checked to see the start point of the coordinates of what number entry in the figure segment table the coordinates of the start point of the selected side are stored as, and then its index is set in n (steps 1109, 1110, and 1111).

In step 1112, it is determined whether the x coordinate of the start point and that of the end point of the selected side are identical. If true, dx is added to the x coordinate of the start point of the n-th entry in the work figure segment table ( step 1113). Thus, in the case where a vertical side is selected as the operated object, the figure can be either enlarged or reduced in size by moving the side in a horizontal direction.

If the decision in step 1112 turns out false, this shows that the y coordinate of the start point and that of the end point of the selected side are identical. Thus, dy is added to the y coordinate of the start point of the n-th entry in the work figure segment table (step 1114). Thus, in the case where a horizontal side is selected as the operated object, the figure can be either enlarged or reduced in size by moving the side in a vertical direction.

If the decision in step 1108 turns out false, this shows that the operation content is an enlargement or reduction with a vertex designated as the operated object. It is then checked to see the coordinates of what number start point in the figure segment table the coordinates of the vertex as the operated object are identical to, and its index is set in n (steps 1115, 1116, 1117).

In step 1118, it is determined whether n is an even number or not, namely whether the vertex of the operated object is located upper left or lower right, or upper right or lower left. Tthe coordinates of the start point in the figure segment table are stored in the anticlockwise order, starting from the upper left vertex in the figure. Thus, by determining whether n is an even or odd number, it can be determined whether the vertex as the operated object is located at the upper left or lower right, or at the upper right or lower left.

If the result of determination in step 1118 is true, this shows that n is an even number. Thus, step 1119 is carried out whereby the index for the vertex following the vertex of the operated object in the anticlockwise order is set in j, and the vertex following the vertex of the operated object in the clockwise order is set in k (step 1119).

If the decision in step 1118 turns out false, this shows that n is an odd number. Thus, the index for the vertex following the vertex of the operated object in the anticlockwise direction is set in k, and the index for the vertex following the vertex of the operated object in the clockwise direction is set in j (step 1120). Thereafter, the routine proceeds to step 1121.

In step 1121, dx and dy are added to the x and the y coordinate, respectively, of the n-th start point in the work figure segment table. Thus, the selected vertex is moved by the pointer movement difference.

Next in step 1122, dx is added to the x coordinate of the j-th start point in the work figure segment table. Thus, the vertical side including the selected vertex is moved only in a horizontal direction of the pointer movement difference.

In step 1123, dy is added to the y coordinate of the k-th start point of the work figure segment table. Thus, the lateral side including the selected vertex is moved only in the vertical direction of the pointer movement difference. Then, the routine proceeds to step 1124 shown in Fig. 26.

In step 1124, the figure after the enlargement or reduction is displayed using the coordinates of the start point of the work figure segment table thus created.

In step 1125, 1 is set in i, thereby storing the fact that the enlarged or reduced figure has been displayed at least once. Thereafter, the routine returns to step 1101 of Fig. 24.

In step 1101 of Fig. 24, if it is determined that the state of the pointer device 1 is not that of completion of operation, the routine proceeds to step 1126 shown in Fig. 27.

In step 1126 of Fig. 27, it is determined that the enlarged or reduced figure has been displayed at least once. If the determination turns out false, this shows that the enlarged or reduced figure has been displayed at least once. Thus, the izd-th figure data is updated with the content of the coordinates of the start point of the work figure segment table (step 1127).

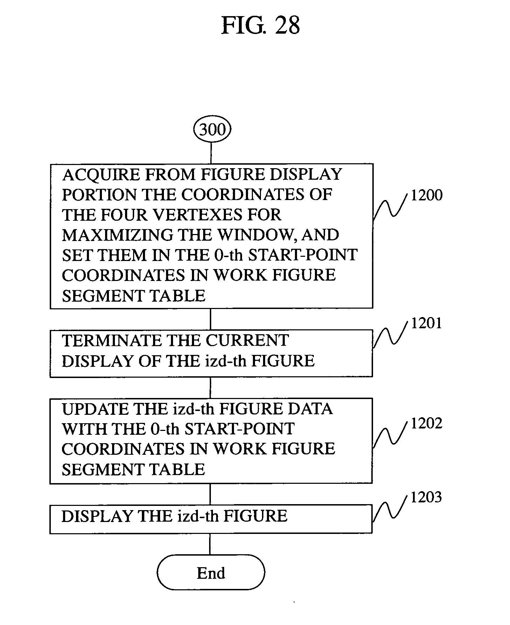

Referring back to Fig. 20, if it turns out that the operation content is maximization, the routine proceeds to step 1200 of Fig. 28.

In step 1200 of Fig. 28, four vertexes of the window to be maximized are acquired and are set in the coordinates of the 0-th start point of the work figure segment table.

In step 1201, the current display of the figure based on the izd-th figure data is terminated.

In step 1202, the izd-th figure data is updated with the coordinates of the four vertexes of the maximized window.

In step 1203, the maximized window (the izd-th figure data) is displayed.

Referring back to Fig. 20, if it turns out that the operation content is minimization, the routine proceeds to step 1300 of Fig. 29, in which the positions of the four vertexes of the window to be minimized are acquired and then set.

In step 1301, the current display of the figure based on the izd-th figure data is terminated.

In step 1302, the izd-th figure data is updated with the coordinates of the four vertexes of the minimized window (the coordinates of the 0-th start point in the work figure segment table).

In step 1303, the minimized window is displayed.

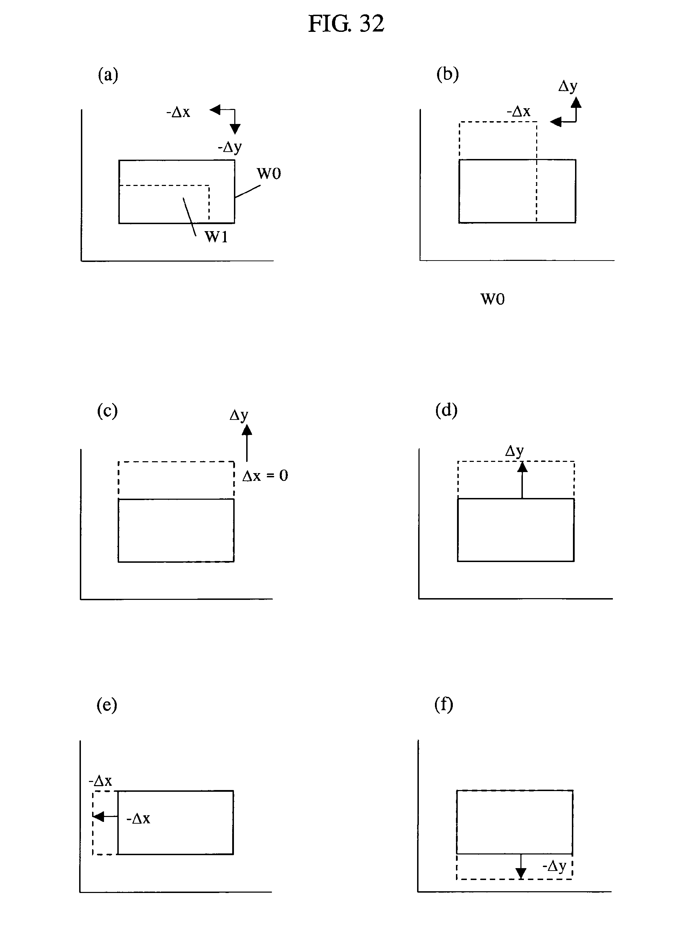

Thus, when an enlargement or reduction operation is carried out as shown in Fig. 4(a), the operated object, namely, the window W0, is enlarged or reduced in size as shown in Figs. 32(a) to (c), in accordance with the amount of movement of the pointer after the movement trajectory of the pointer has intersected itself.

When an enlargement or reduction operation is carried out as shown in Fig. 4(c), the operated object, namely, the window W0, is enlarged or reduced in size to the window W1, as shown in Figs. 32(d) to (f), in accordance with the amount of movement of the pointer after the movement trajectory of the pointer has intersected itself.

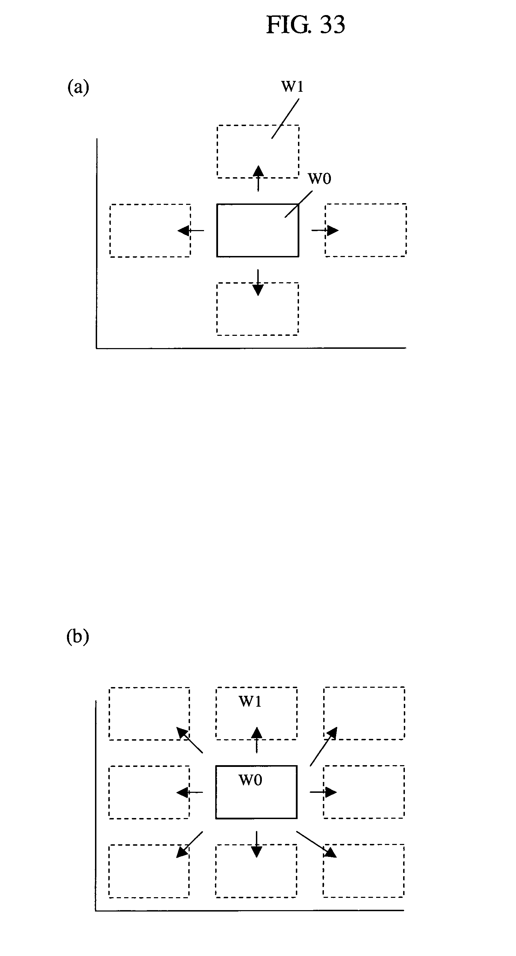

When an enlargement or reduction operation is carried out as shown in Fig. 4(b), the operated object, namely, the window W0, is moved from the current position to the window W1 located at either top, bottom, left, or right, as indicated by a dashed line shown in Fig. 33(a), in accordance with the amount of movement of the pointer after the movement trajectory of the pointer has intersected itself.

When an enlargement or reduction operation is carried out as shown in Fig. 4(d), the operated object, namely, the window W0, is moved from the current position to the window W1 located at any of the top, bottom, left, right and diagonal positions, as indicated by dashed lines shown in Fig. 33(b), in accordance with the amount of movement of the pointer after the movement trajectory of the pointer has intersected itself.

## Claims

1. A method of controlling the size of a window and the position thereof on a screen in a window system, using a pointer device capable of designating a desired position on the screen, said method comprising:
a first step of sequentially acquiring the position of a pointer of said pointer device as said pointer is moved after the movement trajectory of said pointer intersects itself following the start of a pointer moving operation, until said pointer moving operation is completed, and storing the thus acquired positions in a table;
a second step in which it is determined if a part of the movement trajectory of said pointer, which is obtained by putting together the information about the movement positions of said pointer that are stored in said table, intersects any of the frame lines of the window as a controlled object, and in which, if it does, the following factors:
a. the number of frame lines of the window that are intersected; and
b. the number of end-point coordinates of the intersected frame lines,
are checked in order to recognize to which of the instructions of the enlargement/reduction and movement of a window frame the movement trajectory of said pointer corresponds, and to determine a window frame or a vertex as the operated object; and
a third step of enlarging, reducing, or moving the window frame or vertex determined as the operated object in accordance with the thus recognized instruction, in a positional direction in which the movement operation of said pointer has ended after the movement trajectory of said pointer had intersected itself, by an amount corresponding to the amount of movement of said pointer executed before the completion of the movement operation.

2. The method of controlling a window according to claim 1, said second step comprises further recognizing, based on a combination of said factors, if the movement trajectory of said pointer corresponds to an instruction for maximization or minimization of the window frame, and, if it corresponds to an instruction for maximization or minimization, the entire window frame is maximized or minimized to a preset size, instead of said third step.
